# EUROPEAN PATENT SPECIFICATION

(11) **EP 3 468 150 B1**
(45) Date of publication and mention of the grant of the patent: **26.08.2020**
(21) Application number: 17194674.2
(22) Date of filing: 04.10.2017
(51) Int. Cl.: H04L 29/08

(54) **HANDLING QUESTIONS OF CONVERSATIONAL SERVICES**
HANDHABUNG VON FRAGEN VON KONVERSATIONSDIENSTEN
GESTION DE QUESTIONS DE SERVICES CONVERSATIONNELS

(43) Date of publication of application: 10.04.2019
(73) Proprietor: Nokia Technologies Oy, 02610 Espoo (FI)
(72) Inventor: Huysegems, Rafaël, 2018 Antwerpen (BE); Theeten, Bart, 2018 Antwerpen (BE); Van Cutsem, Tom, 2018 Antwerpen (BE)
(74) Representative: IP HILLS NV

(56) References cited:
- US-A1- 2015 066 479
- US-A1- 2015 379 074

## Description

### Technical Field

The present disclosure generally relates to the field of conversational services. More particularly, the disclosure relates to the handling of offers provided by conversational services.

### Background

Conversational services are services offered through electronic devices over a network, such as, for example, the Internet. A user of such a conversational service expresses a request, whereupon the user and the conversational service start to exchange information. This interactively way of transferring information between each other preferably leads to an offer provided by the service to the user.

A request from a user to a conversational service is, for example, "book a taxi", eventually expressed in the form of a natural language utterance, like for example "I need a taxi from my office to Brussels Airport". Subsequently, a questions-and-answers session may be initiated. The conversational service may, for example, ask questions for clarification, such as "what is your destination", which are answered by the user. In other words, a conversation initiated between the user and a conversational service.

Typical phases in such a conversation are, firstly, a user that sends an initial request to a conversation service. In a second phase, the conversational service starts the questions-and-answers session, since the initial request may not comprise all information that is required to make a valid offer. Thirdly, after the session, the conversational service sends an offer to the user and in a final phase, the user either accepts or rejects the offer.

The addressed conversational service may be a dedicated one, such as, for example, for booking a taxi, the Uber conversational service, or a more general one, which offers a variety of services, like Siri, developed by Apple Inc., or Alexa, developed by Amazon Lab126.

Of course, a user may as well use each of these conversational services in search for a best offer. Such a best offer depends on the user and will be either the cheapest one, either the most comfortable one or either determined by any other factor which the user considers significant.

US 2015/0066479 A1 discloses a conversational agent to process natural language queries expressed by a user and performs commands according to the derived intention of the user. A natural language processing (NLP) engine derives intents using conditional random fields to identify a domain and at least one task embodied in the query. The NLP may further identify one or more subdomains, and one or more entities related to the identified command. A template system creates a data structure for information relevant to the derived intent and passes a template to a service manager for interfacing with one or more services capable of accomplishing the task. A dialogue manager may elicit more entities from the user if required by the services manager and otherwise engage in conversation with the user. In one embodiment, the conversational agent allows a user to engage in multiple conversations simultaneously.

### Summary

Besides the fact that such an approach asks a lot of time, this approach results in even several other drawbacks. First, conversational services which meet the requirements of the request of the user need to be identified. Secondly, the user needs to provide all the necessary information to these conversational services, while he or she may not know in advance if a service is trustworthy. Besides, questions raised by services may be cumbersome, redundant or even annoying. Furthermore, because a user is exposed to all those services, privacy issues may occur which potentially leads to spam. Finally, if a user succeeds in obtaining offers from a multitude of conversational services, it may even be difficult or even impossible to compare those offers in a plain way.

It is an object of the present disclosure to alleviate the above identified problems and to provide a solution that provides questions and offers from conversational services in an optimal and coherent manner.

This object is achieved, according to a first aspect, by a service integration system according to claim 1.

A user may express his or her request in the form of a first natural language utterance to the service integration system, which comprises a processing unit configured to receive said request. Next, the request is forwarded to the conversational services which respond with replied questions. The replied questions are then grouped into groups. A group may, for example, comprises replied questions which are similar. Next, grouped replied questions are aggregated into an aggregated question. In other words, the aggregated question may substitute the replied questions of the respective group. This aggregated question is then sent or forwarded to the user.

For example, if a user expresses a request in order to book a taxi-ride, a replied question may be "What is your destination?" or "What is your current location?". Since the request is addressed to a multitude of conversation services, same or similar question may be given in reply. Thus, instead of forwarding all of these questions to the user, the grouping leads to a decrease of the number of questions. A user only needs to reply once to a question, the aggregated question, which substitutes identical or similar questions. In other words, a questions-and-answers session may be performed more efficiently.

The grouping may continue each time the service integration system receives questions from the conversational services.

Several techniques, such as, for example, slot-filling or natural language processing, NLP, may be applied to interpret the request of the user.

The processing unit is further configured to select a group comprising a highest number of replied questions and to forward the aggregated question of said group to the user.

In other words, instead of randomly forwarding an aggregated question to the user, the group having the highest number of group questions is selected, and the aggregated question of said group is first forwarded to the user. In this way and advantageously, the user receives first the mostly similar or identical questions raised by the conversational services.

The service integration further comprises a library, the library comprising:
- a database comprising:
   o personal data of the user; and
   o a set of conversational services and assessment data comprising characteristics of conversational services of the set of conversational services; and
- an interface configured to receive the request, and, subsequently to select a subset of conversational services from the set of conversational services based
on the request and the personal data and/or the assessment data; and wherein the processing unit further is configured to forward the request to the library and to receive in reply the subset, and, to send the request to the conversational services of the subset.

Personal data may, for example, comprises preferences of a user of the service integration system, personal details, such as a home address and/or a phone number, or even professional details, such as a profession and/or an office address.

Characteristics of the one or more conversational services are, for example, the type of services that they provide, a reputation of a conversational service, expressed in a reputation score, locations where a conversational service provides its services and/or the owner or developer of the conversational service. These characteristics are assembled in the assessment data.

The request may be compared with the personal data and/or assessment data, and based thereon it may be determined which of the conversational services are relevant and/or reliable in relation to the request. Thus, prior to forwarding the request to the conversational services, a selection in the form of a subset is made and the request will only be sent to these selected conversational services. In this way, questions that are relevant and/or reliable will be received in reply thereof. Furthermore, the number of questions may also be reduced since it is avoided to select conversational services that may not be able to provide a certain service.

The interface is further configured to receive a replied question, and to derive from the personal data one or more user answers as answers to said replied question, and wherein the one or more user answers are each linked to a probability factor indicative for a relevance of a user answer as an answer to the replied question, and wherein the processing unit is further configured to forward a replied question of the replied questions to the library, and, subsequently to receive in reply one or more user answers and associated probability factors, and to select a user answer having an associated probability factor exceeding a first predefined threshold as the answer to the replied question or to buffer the replied question with the one or more user answers and associated probability factors.

Instead of forwarding a replied question or an aggregated question to the user, the interface consults the database in the library in order to identify an answer to said question. From the personal data, one or more answers which would be otherwise given by the user are derived. Optionally, the derived users answers are linked to a probability factor which indicates how relevant a derived user answer is, or the likelihood that a respective answer would be given by the user. Thus, the processing unit forwards the replied question to the library and receives in reply one or more user answers and related probability factor. From this set of user answers, the one with a probability factor exceeding a first predefined threshold is selected as the answer to the replied question. Alternatively, the replied question is buffered with the set of derived user answers and associated probability factors.

Advantageously, questions raised by the conversational services are answered in a fast and efficient way, without any intervention of the user. In other words, it is avoided that chain of questions is forwarded to the user. In this way, the number of questions received by the user is reduced furthermore.

According to an embodiment, the processing unit is further configured to forward the buffered replied question with one or more user answers of the one or more users answers exceeding a predefined threshold to the user.

Since more than one user answers may be derived as answers to a replied question, and each having a probability factor exceeding a predefined threshold, there may be an uncertainty which answer a user would give to the replied question. In this occurrence, the replied question is forwarded the buffered question with the derived user answers. These answers could then be in the form of pre-constructed quick-picks, comprising the most likely answers to be given by the user. Advantageously, the user may quickly select one of the answers.

According to an embodiment, the processing unit is further configured to group buffered questions in groups, and when a number of buffered questions in a group exceeds a predefined threshold to aggregate the buffered questions of said group into an aggregated question.

In other words, the processing unit waits until it has received enough questions from the conversational services to start the grouping thereof. In this way, it is avoided that a conversational service sends a question which is identical or similar to questions that were already grouped and aggregated.

Another advantage is that a new received question may be compared with buffered questions and already-answered questions. In the latter occurrence, thus when a question was already answered by a user, the service integration system may thus send an answer to the respective conversational service without an intervention of the user.

According to an embodiment, the processing unit is further configured to receive feedback from the user, and to update the personal data and/or assessment data based on the feedback.

Feedback from a user may, for example, be a rating of a service question. Such a rating may, for example, indicate that a question is only raised to profile a user, which on that behalf may lead to spam. Thus, instead of answering the question, the user gives feedback and based on this feedback, the personal data and/or assessment data are updated. This update may, for example, indicate that a particular conversational service is untrustworthy. In this way, it may be avoided that such a conversational service is further consulted.

According to embodiment, the interface is further configured to rate a replied question as an irrelevant question based on:
- the request; and/or
- the assessment data; and/or
- a time period between the forwarding of the request to the conversational services and the receiving in reply the replied questions; and/or
- an amount of received replied questions; and/or
- an amount of forwarded questions; and
wherein the interface is further configured:
- to omit the irrelevant question; and
- to update the assessment data based on the rating

The interface may also itself rate a question, in this case as irrelevant, without feedback of the user. Thus, when the interface receives a service question, it may compare said service question with the request, with the assessment data and/or with a time period between the forwarding of the request and the replied service question. Other factors are an amount of received service questions or an amount of forwarded questions. Next, when the interface rates a replied question as irrelevant, it is omitted instead of forwarding it to the user. In this way, the user only receives which are pertinent from his or her point of view. Furthermore, by updating the assessment data based on said rating, it may also be avoided that a conversational service raising said irrelevant question is consulted again in the future.

According to an embodiment, the processing unit is further configured:
- to receive a user answer in reply to a forwarded replied or aggregated question; and
- to forward the user answer to one or more conversational services associated to the forwarded replied or aggregated question; and
- to receive in reply one or more offers of one or more conversational services; and
- to consolidate the one or more offers as a consolidated offer; and
- to forward the consolidated offer to the user.

Obviously, when the processing unit forwards a replied and/or aggregated question, an answer is expected in return. Thus, the user expresses his answer to the processing unit, and the processing unit receives it. Next, the processing unit forwards the answer to the conversational services that raised the question, of the a set of conversational services that raised said question in a similar or identical way. Next, one or more offers are received from the one or more conversational services. These offers are consolidated and finally forwarded to the user as a consolidated offer.

Advantageously, the user only receives one offer from the whole set of conversational services in a fast and efficient way.

Optionally, the consolidation of the offers may be based on the personal data and/or assessment data.

In this way, the user receives a personal consolidated offer, optionally taking into account, for example, the reliability of the conversational services.

According to a second aspect the disclosure relates to a method for handling questions from conversational services according to claim 8.

According to a third aspect, the disclosure relates to a computer program product comprising computer-executable instructions for performing the method according to the second aspect when the program is run on a computer.

According to a fourth aspect, the disclosure relates to a computer readable storage medium comprising the computer program product according to the third aspect.

According to a fifth aspect, the disclosure relates to a data processing system programmed for carrying out the method according to the second aspect.

### Brief Description of the Drawings

Fig. 1 illustrates a service integration system according to an embodiment of the invention; and
Fig. 2 illustrates a library according to an embodiment of the invention; and
Fig. 3 illustrates steps performed to receive and consolidate offers from conversational services according to an embodiment of the invention; and
Fig. 4 illustrates a suitable computing system for performing steps according to various embodiments of the invention.

### Detailed Description of Embodiment(s)

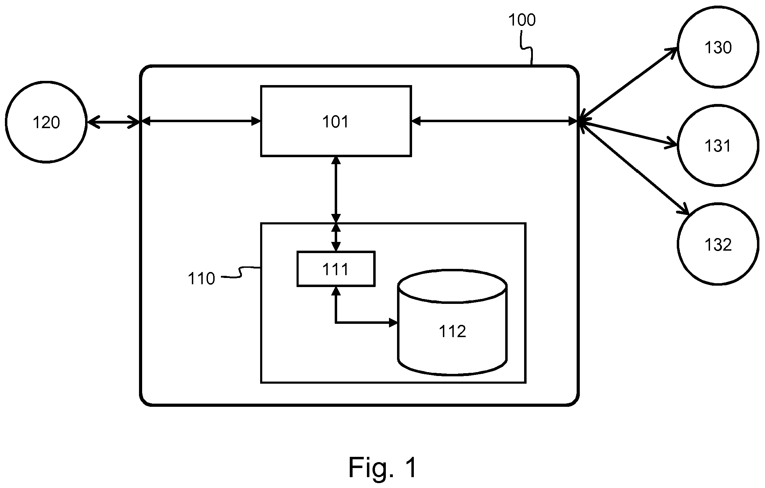

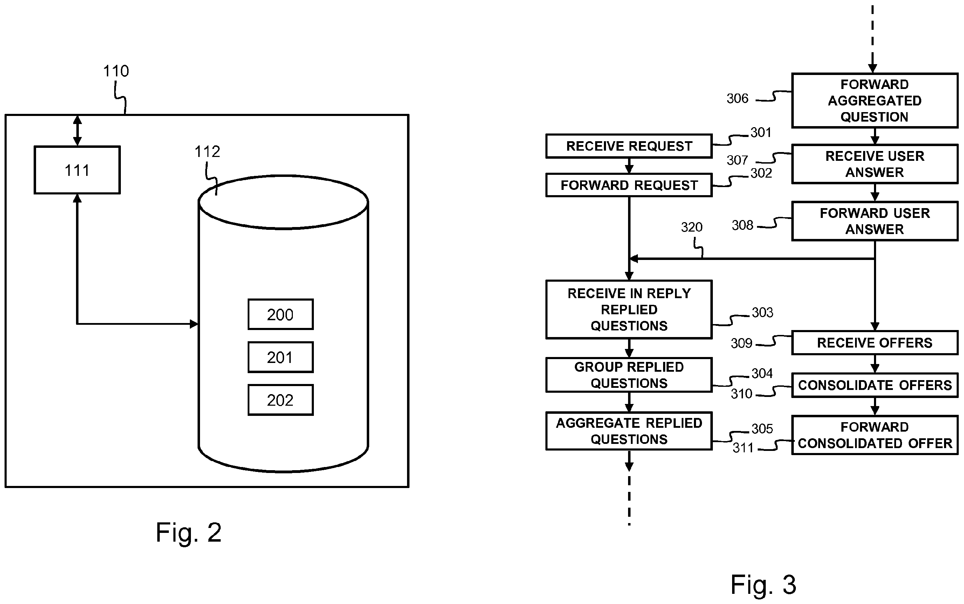

Fig. 1 illustrates a service integration system according to an embodiment of the invention. The service integration system 100 comprises a processing unit 101 and a library 110. Fig. 2 illustrates the library 110 according to an embodiment of the invention. The library 110 comprises an interface 111 and a database 112. The database 112 on its behalf comprises personal data 200, a set of conversational services 201 and assessment data 202.

The personal data 200 comprises preferences of a user, for example personal details and/or professional details of the user 120.

The set of conversational services 201 comprises, for example, references on how to consult or contact the conversational services 130-132, and may even comprise other conversational services which can be consulted.

The assessment data 202 comprises characteristics of the one or more conversational services of the set 201. These characteristics are, for example, the type of services provided, a reputation score, locations where services are offered and/or the owner or developer of a conversational service.

The service integration system 100 is configured for handling questions from conversational services. Fig. 3 illustrates steps performed for such a handling.

In a first step 301, a user 120 expresses a request to the service integration system 100. The request is, for example, expressed in a natural language utterance, which may be interpreted by the processing unit 101 using several techniques like, for example, slot-filling or natural language processing, NLP. Alternatively, the request may be immediately forwarded to the conversational services 130-132, which on their behalves interpret the request.

Next, the request, whether or not interpreted, is forwarded 302 from the user 120 to a number of conversational services, such as 130-132. As already indicated, when the request is not interpreted, the conversational services 130-132 themselves may interpret it. Based on the request, the conversational services 130-131, or only a part of them, send in reply thereof replied questions to the service integration system 100, which are received 303 by the processing unit 101.

Subsequently, the processing unit 101 groups the received 303 replied questions from the conversational services 130-132. A group may, for example, comprises replied questions which are all similar or identical.

In the next step, 305, questions in a group are aggregated 305 into an aggregated question. This aggregated questions thus substitutes the grouped questions of the respective group and is subsequently forwarded 306 to the user 120.

Different criteria may be used in selecting which aggregated question of a particular group is first forwarded. Subsequently or alternatively, these criteria may also determine in which order aggregated questions are forwarded to the user 120.

For example, priority may be given to questions that were asked by multiple conversational services. Another criterium may be to give priority the questions replied by conversational services having a high reputation score. This reputation score may, for example, be derived from the assessment data 202 in the library 110.

Another example of a criterium is to give priority to questions that are identified as being relevant in relation to the request of the user 120. This identification may be determined by, for example, using a word vectoring tool. This tool allows to estimate a distance between the question and the request. The distance may then be used as an estimate for a relevance of the question with respect to the request.

Another approach may be to discover a conversational path followed by each conversational service by mining previous conversations. Based on remaining questions in a recent conversation path of the involved conversational services, priority may be given to a most impactful question, i.e. questions having a highest occurrence in the conversation paths.

Alternatively, a same conversation mining is performed but priority is given to conversational services that are only a limited number, for example one or two, of questions away from generating an offer.

A replacement for mining conversations may also be to crawl each conversational service in order to construct a conversation graph with possible questions.

Alternatively, instead of directly forwarding the aggregated question to the user 120, the processing unit 101 is also configured to derive from the library 110 an answer to said question. Such an answer is based on the personal data 200. In particular, the processing unit 101 forwards the question to the interface 111 of the library 110. Next, the interface 111 derives from the personal data 200 one or more user answers as potential answers to said question. Furthermore, each of these derived questions are linked to a probability factor. This factor indicates the relevance or likelihood of the answer in relation to question. The processing unit 101 receives in reply to the question a set of answers and related probability factor.

The library 110 may be incorporated in the service integration system 100, but may also be located at a remote location, and be consulted by the processing unit 101 through a network.

Thus, the interface 111 of the library 110 receives a question from the processing unit 101 and based on the question a set of personal answers and associated probability factors are sent in reply to the processing unit 101.

According to an embodiment of the invention, the processing unit 101 then selects a personal answer, also labelled as user answer, having an associated probability factor exceeding a first predefined threshold. This answer is thus selected as the answer to the respective question. As a result, the processing unit 101 sends the selected answer to those conversational services that raised the corresponding question.

According to an embodiment, the processing unit 101 may also buffer the one or more derived personal answers with the corresponding associated probability factors and the related question received from the interface 111.

These buffered question and related answers are forwarded to the user 120. Alternatively, only a part of the answers, in particular those having an associated probability factor exceeding a predefined threshold, are forwarded to the user 120. In this way, the user 120 receives a list of potential answers and may easily select one of these answers as an answer to the related question.

According to an embodiment, the processing unit 101 may also buffer the derived personal answers. Next, the buffered questions are grouped and when the number of buffered questions exceeds a predefined threshold, the buffered questions are aggregated into an aggregated question.

After forwarding 306 the aggregated question to the user 120, a user answer is received 307 in return. Alternatively, and as already highlighted, such a user answer may also be derived from the personal data 200 in the library 110. Next, the user answer is forwarded 308 to these conversational services that raised the corresponding question. These conversational services may then reply with an additional set of replied questions. In other words, prior to the making of an offer by a conversational service, typically an exchange of questions and answers between the user and the conversational services occurs.

In this occurrence, the additional set of replied questions may be treated 320 in a same way as the first set of replied questions. The process of receiving question from the conversational services, buffering and aggregating questions and selecting a question to the user 120 is thus performed in an iterative way.

Due to this iterative process, questions and answers exchanged between the user 120 and conversational services 130-132 may be decoupled by the service integration system 100. Different conversational services may request same information, but may not ask similar questions when requesting it. Furthermore, similar questions may be raised in different order by the various conversational services. The process of buffering, aggregating and selecting questions by the service integration system 100 used to decouple questions results therefore in a reduction of questions sent to the user 120.

Typically, after a number of iterations the conversational services 130-132 reply with an offer, and the offers are received 309 by the processing unit 101. The processing unit 101 consolidates 310 these offers and forwards 311 the consolidated offer to the user 120.

The consolidation 310 of the offer may be based on the personal data 200 and/or assessment data 202.

According to an embodiment, the processing unit 101 is further configured to select a subset of conversational services to which the request of the user 120 is sent to. The selecting of this subset is based on the request itself and on the personal data 200 and assessment data.

The processing unit 101 receives the request and forwards it to the interface 111 of the library 110. Based on the request, the personal data 200 and the assessment 202 are consulted. Next, a subset of the set of the conversational services 201 is selected. The processing unit 101 then only forwards the request from the user 120 to the conversational services of the subset. Obviously, the service integration system 100 only receives replied questions from these selected conversational services.

The processing unit 101 may be further configured to receive feedback from the user 120. Thus, instead of answering a question, the user 120 expresses his or her appraisal on a question. He or she may, for example, indicate that a question is irrelevant or superfluous. Next, based on the feedback, the personal data 200 and/or assessment data 202 is updated.

The processing unit 101 is further configured to rate itself a question as irrelevant instead of the user 120. The processing unit 101 forwards the question to the interface 111 and based on the related request, the assessment data, the amount of received and/or forwarded question and/or a time between the forwarding of the request to the conversational services and the receiving in reply a question, the interface may label the question as irrelevant. Next, the interface omits said question an update the assessment data. As a result, the processing unit 101 ignores said irrelevant question.

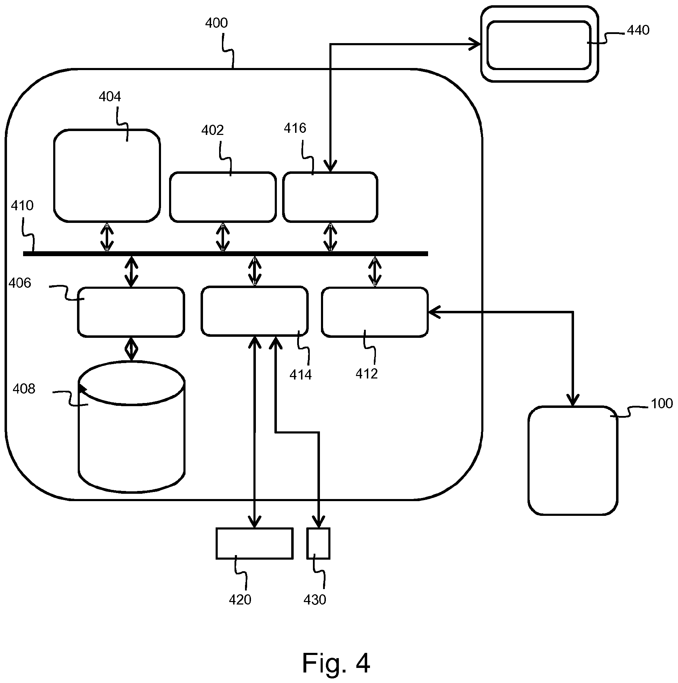

Fig. 4 shows a suitable computing system 400 for performing the steps according to the above embodiments. Computing system 400 may be used as an application comprising the service integration system 100. Computing system 400 may in general be formed as a suitable general-purpose computer and comprise a bus 410, a processor 402, a local memory 404, one or more optional input interfaces 414, one or more optional output interfaces 416, a communication interface 412, a storage element interface 406 and one or more storage elements 408. Bus 410 may comprise one or more conductors that permit communication among the components of the computing system 400. Processor 402 may include any type of conventional processor or microprocessor that interprets and executes programming instructions. Local memory 404 may include a random-access memory (RAM) or another type of dynamic storage device that stores information and instructions for execution by processor 402 and/or a read only memory (ROM) or another type of static storage device that stores static information and instructions for use by processor 402. Input interface 414 may comprise one or more conventional mechanisms that permit an operator to input information to the computing device 400, such as a keyboard 420, a mouse 430, a pen, voice recognition and/or biometric mechanisms, etc. Output interface 416 may comprise one or more conventional mechanisms that output information to the operator, such as a display 440, etc. Communication interface 412 may comprise any transceiver-like mechanism such as for example one or more Ethernet interfaces that enables computing system 400 to communicate with other devices and/or systems to acquire the parameters at regular intervals. The communication interface 412 of computing system 400 may be connected to such another computing system by means of a local area network (LAN) or a wide area network (WAN) such as for example the internet. Storage element interface 406 may comprise a storage interface such as for example a Serial Advanced Technology Attachment (SATA) interface or a Small Computer System Interface (SCSI) for connecting bus 410 to one or more storage elements 408, such as one or more local disks, for example SATA disk drives, and control the reading and writing of data to and/or from these storage elements 408. Although the storage elements 408 above is described as a local disk, in general any other suitable computer-readable media such as a removable magnetic disk, optical storage media such as a CD or DVD, -ROM disk, solid state drives, flash memory cards, ... could be used. The system 400 described above can also run as a virtual machine above the physical hardware

Although the present invention has been illustrated by reference to specific embodiments, it will be apparent to those skilled in the art that the invention is not limited to the details of the foregoing illustrative embodiments and that the scope of the invention is being indicated by the appended claims.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A service integration system (100) for handling questions from conversational services (130-132) comprising a processing unit (101) configured:
- to receive a request from a user (120); and
- to forward the request to the conversational services (130-132); and
- to receive in reply to the request respective replied questions from the conversational services (130-132); and
- to group the replied questions in groups; and
- to aggregate replied questions of a group into an aggregated question; and
- to forward the aggregated question to the user,
and wherein the processing unit (101) is further configured:
- to select a group comprising a highest number of replied questions; and
- to forward the aggregated question of said group to the user,
and wherein the service integration system (100) further comprising a library (110), the library comprising:
- a database (112) comprising:
o personal data of the user (200); and
o a set of conversational services (201) and assessment data (202) comprising characteristics of conversational services of the set of conversational services; and
- an interface (111) configured to receive the request, and, subsequently to select a subset of conversational services from the set of conversational services based on the request and the personal data (200) and/or the assessment data (202); and
wherein the processing unit (101) further is configured to forward the request to the library (110) and to receive in reply the subset, and, to send the request to the conversational services of the subset,
**CHARACTERIZED IN THAT** the interface (111) is further configured:
- to receive a replied question; and
- to derive from the personal data (200) one or more user answers as answers to said replied question; and wherein the one or more user answers are each linked to a probability factor indicative for a relevance of a user answer as an answer to the replied question;
and **in that** the processing unit (101) is further configured to forward a replied question of the replied questions to the library (110), and, subsequently to receive in reply one or more user answers and associated probability factors; and
- to select a user answer having an associated probability factor exceeding a first predefined threshold as the answer to the replied question.

2. The service integration system (100) according to claim 1, wherein the processing unit (101) is further configured to buffer the replied question with the one or more user answers and associated probability factors.

3. The service integration system (100) according to claim 2, wherein the processing unit (101) is further configured to forward the buffered replied question with one or more user answers of the one or more users answers having probability factors exceeding a second predefined threshold to the user.

4. The service integration system (100) according to claim 3, wherein the processing unit (101) is further configured to group buffered questions in groups; and when a number of buffered questions in a group exceeds a predefined threshold to aggregate the buffered questions of said group into an aggregated question.

5. The service integration system (100) according to claim 4, wherein the processing unit (101) is further configured:
- to receive feedback from the user (120); and
- to update the personal data (200) and/or assessment data (201) based on the feedback.

6. The service integration system (100) according to claim 5, wherein the interface (111) is further configured to rate a replied question as an irrelevant question based on:
- the request; and/or
- the assessment data (201); and/or
- a time period between the forwarding of the request to the conversational services and the receiving in reply the replied questions; and/or
- an amount of received replied questions; and/or
- an amount of forwarded questions; and
wherein the interface (111) is further configured:
- to omit the irrelevant question; and
- to update the assessment data based on the rating.

7. The service integration system (100) according to claim 6, wherein the processing unit (101) is further configured:
- to receive a user answer in reply to a forwarded replied or aggregated question; and
- to forward the user answer to one or more conversational services (130-132) associated to the forwarded replied or aggregated question; and
- to receive in reply one or more offers of one or more conversational services; and
- to consolidate the one or more offers as a consolidated offer; and
- to forward the consolidated offer to the user.

8. The service integration system (100) according to claim 7, wherein the consolidation of the one or more offers is based on the personal data and/or the assessment data.

9. Method for handling questions from conversational services, the method comprising the steps of:
- receiving (301) a request from a user and, subsequently to receiving said request, receiving a subset of conversational services from a set of conversational services based on the request, a personal data (200) of the user and/or assessment data (202) comprising characteristics of conversational services of the set of conversational services; and
- forwarding (302) the request to the subset of conversational services; and
- receiving (303) in reply to the request respective replied questions from the subset of conversational services; and
- grouping (304) the replied questions in groups and selecting a group comprising a highest number of replied questions; and
- aggregating (305) replied questions of the selected group into an aggregated question; and
- forwarding (306) the aggregated question to the user,
**CHARACTERIZED IN THAT** the method further comprising the steps of:
- receiving a replied question; and
- subsequently to receiving the replied question, receiving in reply one or more user answers as answers to the replied question and associated probability factors; wherein the one or more user answers are each linked to a probability factor indicative for a relevance of a user answer as an answer to the replied question; and
- selecting a user answer having an associated probability factor exceeding a first predefined threshold as the answer to the replied question.

10. The method according to claim 9, further comprising the step of buffering the replied question with the one or more user answers and associated probability factors.

11. A computer program product comprising computer-executable instructions for performing the method according to claim 9 or 10 when the program is run on a computer.

12. A computer readable storage medium comprising the computer program product according to claim 11.

## Patentansprüche

1. Dienstintegrationssystem (100) zum Bearbeiten von Fragen aus Konversationsdiensten (130-132), umfassend eine Verarbeitungseinheit (101), ausgelegt:
- zum Empfangen einer Anfrage von einem Benutzer (120); und
- zum Weiterleiten der Anfrage an die Konversationsdienste (130-132); und
- zum Empfangen jeweiliger erwiderter Fragen von den Konversationsdiensten (130-132) in Erwiderung auf die Anfrage; und
- zum Gruppieren der erwiderten Fragen in Gruppen; und
- zum Aggregieren erwiderter Fragen einer Gruppe in eine aggregierte Frage; und
- zum Weiterleiten der aggregierten Frage an den Benutzer,
und wobei die Verarbeitungseinheit (101) ferner ausgelegt ist:
- zum Auswählen einer Gruppe, die eine höchste Anzahl an erwiderten Fragen umfasst; und
- zum Weiterleiten der aggregierten Frage der Gruppe an den Benutzer,
und wobei das Dienstintegrationssystem (100) ferner eine Bibliothek (110) umfasst, wobei die Bibliothek Folgendes umfasst:
- eine Datenbank (112), die Folgendes umfasst:
o persönliche Daten (200) des Benutzers; und
o einen Satz von Konversationsdiensten (201) und Beurteilungsdaten (202), die Charakteristiken von Konversationsdiensten des Satzes von Konversationsdiensten umfassen; und
- eine Schnittstelle (111), ausgelegt zum Empfangen der Anfrage und anschließend zum Auswählen eines Teilsatzes von Konversationsdiensten aus dem Satz von Konversationsdiensten basierend auf der Anfrage und den persönlichen Daten (200) und/oder den Beurteilungsdaten (202); und
wobei die Verarbeitungseinheit (101) ferner ausgelegt ist zum Weiterleiten der Anfrage an die Bibliothek (110) und zum Empfangen des Teilsatzes in Erwiderung und zum Senden der Anfrage an die Konversationsdienste des Teilsatzes,
**DADURCH GEKENNZEICHNET, DASS** die Schnittstelle (111) ferner ausgelegt ist:
- zum Empfangen einer erwiderten Frage; und
- zum Ableiten einer oder mehrerer Benutzerantworten aus den persönlichen Daten (200) als Antworten auf die erwiderte Frage; und wobei die eine oder die mehreren Benutzerantworten jeweils mit einem Wahrscheinlichkeitsfaktor verknüpft sind, der auf eine Relevanz einer Benutzerantwort als eine Antwort auf die erwiderte Frage hinweist;
und dadurch, dass die Verarbeitungseinheit (101) ferner ausgelegt ist zum Weiterleiten einer erwiderten Frage der erwiderten Fragen an die Bibliothek (110) und anschließend zum Empfangen einer oder mehrerer Benutzerantworten und assoziierter Wahrscheinlichkeitsfaktoren in Erwiderung; und
- zum Auswählen einer Benutzerantwort mit einem eine erste vorgegebene Schwelle überschreitenden assoziierten Wahrscheinlichkeitsfaktor als die Antwort auf die erwiderte Frage.

2. Dienstintegrationssystem (100) nach Anspruch 1, wobei die Verarbeitungseinheit (101) ferner ausgelegt ist zum Puffern der erwiderten Frage mit der einen oder den mehreren Benutzerantworten und assoziierten Wahrscheinlichkeitsfaktoren.

3. Dienstintegrationssystem (100) nach Anspruch 2, wobei die Verarbeitungseinheit (101) ferner ausgelegt ist zum Weiterleiten der gepufferten erwiderten Antwort mit einer oder mehreren Benutzerantworten der einen oder der mehreren Benutzerantworten, die eine zweite vorgegebene Schwelle überschreitende Wahrscheinlichkeitsfaktoren aufweisen, an den Benutzer.

4. Dienstintegrationssystem (100) nach Anspruch 3, wobei die Verarbeitungseinheit (101) ferner ausgelegt ist zum Gruppieren gepufferter Fragen in Gruppen; und wenn eine Anzahl gepufferter Fragen in einer Gruppe eine vorgegebene Schwelle überschreitet, zum Aggregieren der gepufferten Fragen der Gruppe in eine aggregierte Frage.

5. Dienstintegrationssystem (100) nach Anspruch 4, wobei die Verarbeitungseinheit (101) ferner ausgelegt ist:
- zum Empfangen einer Rückmeldung von dem Benutzer (120); und
- zum Aktualisieren der persönlichen Daten (200) und/oder der Beurteilungsdaten (201) basierend auf der Rückmeldung.

6. Dienstintegrationssystem (100) nach Anspruch 5, wobei die Schnittstelle (111) ferner ausgelegt ist zum Bewerten einer erwiderten Antwort als eine irrelevante Frage basierend auf:
- der Anfrage; und/oder
- den Beurteilungsdaten (201); und/oder
- einem Zeitraum zwischen dem Weiterleiten der Anfrage an die Konversationsdienste und dem Empfangen der erwiderten Fragen in Erwiderung; und/oder
- einer Anzahl empfangener erwiderter Fragen; und/oder
- einer Anzahl weitergeleiteter Fragen; und
wobei die Schnittstelle (111) ferner ausgelegt ist:
- zum Nichtberücksichtigen der irrelevanten Fragen; und
- zum Aktualisieren der Beurteilungsdaten basierend auf der Bewertung.

7. Dienstintegrationssystem (100) nach Anspruch 6, wobei die Verarbeitungseinheit (101) ferner ausgelegt ist:
- zum Empfangen einer Benutzerantwort in Erwiderung auf eine weitergeleitete erwiderte oder aggregierte Frage; und
- zum Weiterleiten der Benutzerantwort an einen oder mehrere Konversationsdienste (130-132), die mit der weitergeleiteten erwiderten oder aggregierten Frage assoziiert sind; und
- zum Empfangen eines oder mehrerer Angebote eines oder mehrerer Konversationsdienste in Erwiderung; und
- zum Konsolidieren des einen oder der mehreren Angebote als ein konsolidiertes Angebot; und
- zum Weiterleiten des konsolidierten Angebots an den Benutzer.

8. Dienstintegrationssystem (100) nach Anspruch 7, wobei die Konsolidierung des einen oder der mehreren Angebote auf den persönlichen Daten und/oder den Beurteilungsdaten basiert.

9. Verfahren zum Bearbeiten von Fragen aus Konversationsdiensten, wobei das Verfahren die folgenden Schritte umfasst:
- Empfangen (301) einer Anfrage von einem Benutzer und, anschließend an das Empfangen der Anfrage, Empfangen eines Teilsatzes von Konversationsdiensten von einem Satz von Konversationsdiensten basierend auf der Anfrage, persönlichen Daten (200) des Benutzers und/oder Beurteilungsdaten (202), die Charakteristiken von Konversationsdiensten des Satzes von Konversationsdiensten umfassen; und
- Weiterleiten (302) der Anfrage an den Teilsatz von Konversationsdiensten; und
- Empfangen (303) jeweiliger erwiderter Fragen von dem Teilsatz von Konversationsdiensten in Erwiderung auf die Anfrage; und
- Gruppieren (304) der erwiderten Fragen in Gruppen und Auswählen einer Gruppe, die eine höchste Anzahl erwiderter Fragen umfasst; und
- Aggregieren (305) erwiderter Fragen der ausgewählten Gruppe in eine aggregierte Frage; und
- Weiterleiten (306) der aggregierten Frage an den Benutzer,
**DADURCH GEKENNZEICHNET, DASS** das Verfahren ferner die folgenden Schritte umfasst:
- Empfangen einer erwiderten Frage; und
- anschließend an das Empfangen der erwiderten Frage, Empfangen einer oder mehrerer Benutzerantworten als Antworten auf die erwiderte Frage und assoziierter Wahrscheinlichkeitsfaktoren in Erwiderung; wobei die eine oder die mehreren Benutzerantworten jeweils mit einem Wahrscheinlichkeitsfaktor verknüpft sind, der auf eine Relevanz einer Benutzerantwort als eine Antwort auf die erwiderte Frage hinweist; und
- Auswählen einer Benutzerantwort mit einem eine erste Schwelle überschreitenden assoziierten Wahrscheinlichkeitsfaktor als die Antwort auf die erwiderte Frage.

10. Verfahren nach Anspruch 9, ferner umfassend den Schritt des Pufferns der erwiderten Frage mit der einen oder den mehreren Benutzerantworten und assoziierten Wahrscheinlichkeitsfaktoren.

11. Computerprogrammprodukt, das computerausführbare Anweisungen umfasst zum Durchführen des Verfahrens nach Anspruch 9 oder 10, wenn das Programm auf einem Computer ausgeführt wird.

12. Computerlesbares Speichermedium, das das Computerprogrammprodukt nach Anspruch 11 umfasst.

## Revendications

1. Système d'intégration de services (100) pour traiter les questions de services conversationnels (130-132) comprenant une unité de traitement (101) configurée :
- pour recevoir une demande d'un utilisateur (120) ; et
- pour transmettre la demande aux services conversationnels (130-132) ; et
- pour recevoir en réponse à la demande les questions auxquelles il a été répondu respectives des services conversationnels (130-132) ; et
- pour regrouper les questions auxquelles il a été répondu dans des groupes ; et
- pour agréger les questions d'un groupe auxquelles il a été répondu en une question agrégée ; et
- pour transmettre la question agrégée à l'utilisateur, et où l'unité de traitement (101) est en outre configurée :
- pour sélectionner un groupe comprenant le plus grand nombre de questions auxquelles il a été répondu ; et
- pour transmettre la question agrégée dudit groupe à l'utilisateur,
et où le système d'intégration de services (100) comprend en outre une bibliothèque (110), la bibliothèque comprenant :
- une base de données (112) comprenant :
o des données personnelles de l'utilisateur (200) ; et
o un ensemble de services conversationnels (201) et de données d'évaluation (202) comprenant les caractéristiques des services conversationnels de l'ensemble de services conversationnels ; et
- une interface (111) configurée pour recevoir la demande et, ensuite, pour sélectionner un sous-ensemble de services conversationnels parmi l'ensemble de services conversationnels sur la base de la demande et des données personnelles (200) et/ou des données d'évaluation (202) ; et
où l'unité de traitement (101) est en outre configurée pour transmettre la demande à la bibliothèque (110) et pour recevoir, en réponse, le sous-ensemble, et pour envoyer la demande aux services conversationnels du sous-ensemble,
**caractérisé en ce que** l'interface (111) est en outre configurée :
- pour recevoir une question à laquelle il a été répondu ;
- pour dériver des données personnelles (200) une ou plusieurs réponses d'utilisateur en tant que réponses à ladite question à laquelle il a été répondu ; et où les une ou plusieurs réponses d'utilisateur sont chacune liées à un facteur de probabilité indicatif de la pertinence d'une réponse d'utilisateur en tant que réponse à la question à laquelle il a été répondu ;
et **en ce que** l'unité de traitement (101) est en outre configurée pour transmettre à la bibliothèque (110) une question à laquelle il a été répondu parmi les questions auxquelles il a été répondu et, ensuite, pour recevoir en réponse une ou plusieurs réponses d'utilisateur et des facteurs de probabilité associés ; et
- pour sélectionner une réponse d'utilisateur à laquelle est associé un facteur de probabilité dépassant un premier seuil prédéfini comme réponse à la question à laquelle il a été répondu.

2. Système d'intégration de services (100) selon la revendication 1, dans lequel l'unité de traitement (101) est en outre configurée pour mettre en mémoire tampon la question à laquelle il a été répondu avec une ou plusieurs réponses d'utilisateur et les facteurs de probabilité associés.

3. Système d'intégration de services (100) selon la revendication 2, dans lequel l'unité de traitement (101) est en outre configurée pour transmettre à l'utilisateur la question en mémoire tampon à laquelle il a été répondu avec une ou plusieurs réponses d'utilisateur des une ou plusieurs réponses d'utilisateur ayant des facteurs de probabilité dépassant un deuxième seuil prédéfini.

4. Système d'intégration de services (100) selon la revendication 3, dans lequel l'unité de traitement (101) est en outre configurée pour regrouper les questions mises en mémoire tampon dans des groupes ; et, lorsque le nombre de questions mises en mémoire tampon dans un groupe dépasse un seuil prédéfini, pour agréger les questions mises en mémoire tampon dudit groupe en une question agrégée.

5. Système d'intégration de services (100) selon la revendication 4, dans lequel l'unité de traitement (101) est en outre configurée :
- pour recevoir un retour d'informations de la part de l'utilisateur (120) ; et
- pour mettre à jour les données personnelles (200) et/ou les données d'évaluation (201) sur la base du retour d'informations.

6. Système d'intégration de services (100) selon la revendication 5, dans lequel l'interface (111) est en outre configurée pour noter une question à laquelle il a été répondu comme une question non pertinente sur la base :
- de la demande ; et/ou
- des données d'évaluation (201) ; et/ou
- d'un délai entre la transmission de la demande aux services conversationnels et la réception, en réponse, des questions auxquelles il a été répondu ; et/ou
- d'une quantité reçue de questions auxquelles il a été répondu ; et/ou
- d'une quantité de questions transmises ; et
où l'interface (111) est en outre configurée :
- pour omettre la question non pertinente ; et
- pour mettre à jour les données d'évaluation sur la base de la notation.

7. Système d'intégration de services (100) selon la revendication 6, dans lequel l'unité de traitement (101) est en outre configurée :
- pour recevoir une réponse d'utilisateur en réponse à une question transmise à laquelle il a été répondu ou qui a été agrégée ; et
- pour transmettre la réponse d'utilisateur à un ou plusieurs services conversationnels (130-132) associés à la question transmise à laquelle il a été répondu ou qui a été agrégée ; et
- pour recevoir en réponse une ou plusieurs offres d'un ou plusieurs services conversationnels ; et
- pour consolider les une ou plusieurs offres sous la forme d'une offre consolidée ; et
- pour transmettre l'offre consolidée à l'utilisateur.

8. Système d'intégration de services (100) selon la revendication 7, dans lequel la consolidation des une ou plusieurs offres est basée sur les données personnelles et/ou les données d'évaluation.

9. Procédé de gestion de questions de services conversationnels, le procédé comprenant :
- la réception (301) d'une demande d'un utilisateur et, à la suite de la réception de ladite demande, la réception d'un sous-ensemble de services conversationnels d'un ensemble de services conversationnels sur la base de la demande, de données personnelles (200) de l'utilisateur et/ou de données d'évaluation (202) comprenant les caractéristiques des services conversationnels de l'ensemble de services conversationnels ; et
- la transmission (302) de la demande au sous-ensemble de services conversationnels ; et
- la réception (303), en réponse à la demande, des questions respectives auxquelles il a été répondu depuis le sous-ensemble de services conversationnels ; et
- le regroupement (304) des questions auxquelles il a été répondu dans des groupes, et la sélection d'un groupe comprenant le plus grand nombre de questions auxquelles il a été répondu ; et
- l'agrégation (305) des questions auxquelles il a été répondu du groupe sélectionné en une question agrégée ; et
- la transmission (306) de la question agrégée à l'utilisateur,
**caractérisé en ce que** le procédé comprend en outre :
- la réception d'une question à laquelle il a été répondu ; et
- après avoir reçu la question à laquelle il a été répondu, la réception, en réponse, d'une ou plusieurs réponses d'utilisateur en tant que réponses à la question à laquelle il a été répondu et des facteurs de probabilité associés ; où les une ou plusieurs réponses d'utilisateur sont chacune liées à un facteur de probabilité indicatif de la pertinence d'une réponse d'utilisateur en tant que réponse à la question à laquelle il a répondu ; et
- la sélection d'une réponse d'utilisateur ayant un facteur de probabilité associé dépassant un premier seuil prédéfini comme réponse à la question à laquelle il a été répondu.

10. Procédé selon la revendication 9, comprenant en outre de mettre en mémoire tampon la question à laquelle il a été répondu avec les une ou plusieurs réponses d'utilisateur et les facteurs de probabilité associés.

11. Produit programme informatique comprenant des instructions exécutables par ordinateur pour exécuter le procédé selon la revendication 9 ou la revendication 10 lorsque le programme est exécuté sur un ordinateur.

12. Support de stockage lisible par ordinateur comprenant le produit programme informatique selon la revendication 11.
